# EUROPEAN PATENT APPLICATION

(11) **EP 1 462 838 A1**
(43) Date of publication of application: **29.09.2004**
(21) Application number: 04425069.4
(22) Date of filing: 06.02.2004
(51) Int. Cl.: G02B 6/52

(54) **Apparatus for laying optical fibres in ducts using fluid drag**

(30) Priority: 26.03.2003 IT RM20030133
(71) Applicant: FIBOT HOLDING LTD., Pieta'MSD - Malta (MT)
(72) Inventor: Vella Gregory, Joseph Fibot Holding Ltd, Pieta 'MSD (MT)
(74) Representative: Iannone, Carlo Luigi

(57) **Abstract**

The present invention relates to an apparatus for laying bare fibres (4) comprising a watertight chamber (1), having an outlet communicating with the fibre (4) laying tube (6), and an inlet for feeding fibres (4) inside the same, dragging means (8) for the fibres (4) fed inside the watertight chamber (1) toward said tube (6), means (3) for introducing within said watertight chamber (1) a pressure fluid flow (2), and fibre (4) distribution means (12), means (13) for conveying the pressure fluid (2) and means (14) for collecting the pressure fluid (2) and the fibres (4) toward said tube.

## Description

The present invention relates to an apparatus for laying bare fibres.

More specifically, the invention concerns an apparatus of the above kind integrated with element necessary for laying bare fibres blown by a pressurised hydraulic fluid, such as nitrogen, air and eventually water.

As it is well known, in the recent years it is always more diffused, for cabling industrial buildings and/or large entrance areas, providing during the civil works realisation, mini tubes to be then used for lying bare fibres.

It is an essentially economic solution, aimed to have the possibility of laying afterwards only the fibres necessary to the connections provided by the informatics designs, requiring the use and the development of the locations after some time.

Furthermore, in this way it is maintained the possibility of employing bare fibres, that are very economic with respect to the cost of optical cables, thus remarkably lowering investments.

Usually, laying of blown bare fibres occurs within mini tubes, having a diameter comprised between 5 and 10 mm, and small length of the laying distances, in the order of some hundredths meters.

At present, most employed laying technique is the blown technique, exploiting the dragging effect on the pressurised hydraulic fluid.

Recently, it has been filed the Italian Patent N° 1,249,730, having as title "Method and apparatus for laying optical fibres not protected mechanically within a tube by pressure anhydrous nitrogen (N2)", on the solution of which it is based the present invention, substantially describing a Laval chamber integrated with elements essential for an efficient system, realising the blown laying of the bare fibres.

It is therefore specific object of the present invention an apparatus for laying bare fibres comprising a watertight chamber, having an outlet communicating with the fibre laying tube, and an inlet for feeding fibres inside the same, dragging means for the fibres fed inside the watertight chamber toward said tube, means for introducing within said watertight chamber a pressure fluid flow, and fibre distribution means, means for conveying the pressure fluid and means for collecting the pressure fluid and the fibres toward said tube.

Preferably, according to the invention, said means for dragging the fibres within the watertight camera are comprised of two motorised rolls, the motorisation means being preferably positioned outside said watertight chamber.

Furthermore, according to the invention, said fibres are fed within the watertight chamber by a sealing stuffing box.

Always according to the invention, said fibres are taken from an idle reel, rotated by the action of said fibre dragging means.

Still according to the invention, said fibre distribution means are comprised of a cylindrical distributed element within which fibres are addressed by said dragging means.

Further, according to the invention said pressure fluid conveying means are comprised of bell shaped conveying means placed at the exit of said fibres distribution means.

Always according to the invention, said means for collecting the pressure fluid and the fibres are comprised of a cylindrical collection element placed at the exit of said conveying means.

Furthermore, according to the invention, said pressure fluid can be comprised of Nitrogen, air, water, etc..

The present invention will be now described, for illustrative but not limitative purposes, according to its preferred embodiments, with particular reference to the figures of the enclosed drawings, wherein:

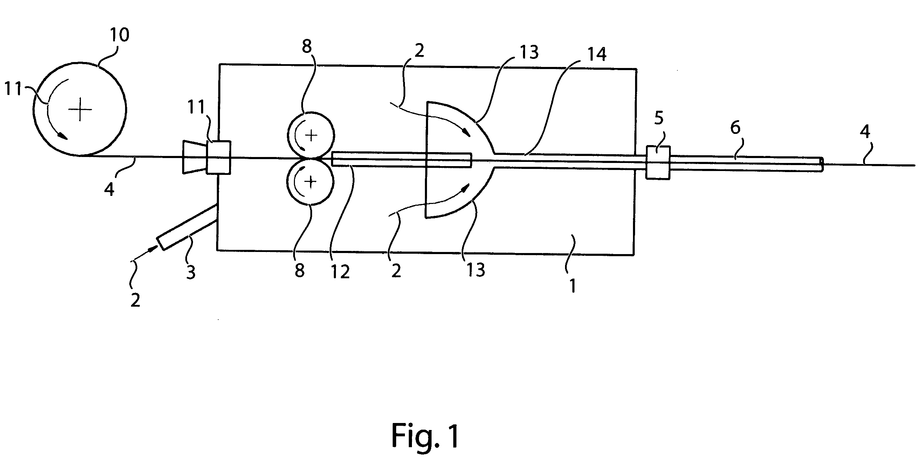

Figure 1 is a schematic lateral view of an apparatus according to the invention; and

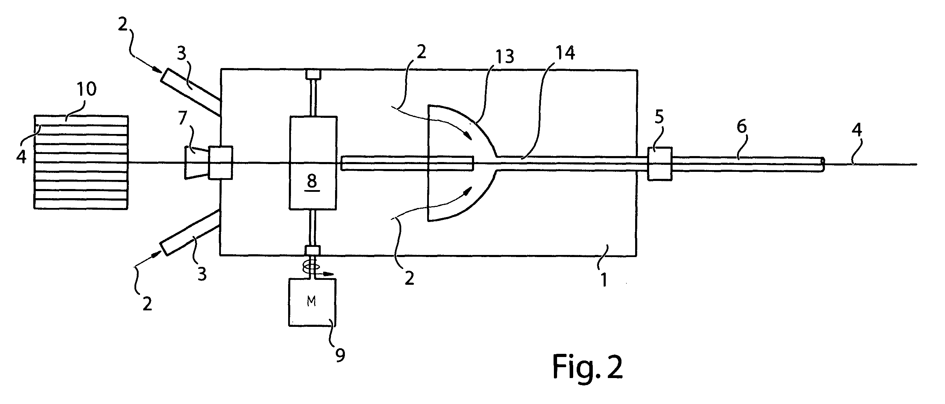

Figure 2 is a top schematic view of the apparatus of figure 1.

Observing now figures of the enclosed drawings, it can be noted that apparatus according to the invention provides an integrated Laval chamber, essentially comprised of a watertight chamber 1, within which the pressure hydraulic fluid, generically indicated by reference number 2, is introduced through two symmetrical nozzles 3, to reduce possible fluid turbulences.

Hydraulic fluid 2 is introduced within the chamber 1, where it will be subjected to an expansion, and pressure energy will be partly transformed into kinetic energy dragging fibres 4, trusted toward the exit nozzle 5 toward the tube 6.

Said fibres 4 are introduce within the chamber 1 at the same time of the introduction of the hydraulic fluid 2, through the pressure sealing stuffing box 7.

Two rolls 8, provided within the chamber 1, operated by motorisation 9, outside the chamber 1, will serve for the mechanical dragging of the fibres 4 from the outside reel 10 for recovery within the same chamber 1.

Two rolls 8 also determine the rotation of the reel 10, according to the direction of the arrow 11, allowing the passage of the fibres 4 through the stuffing box 7, exceeding the resistance against the motion due to the pressure seal of the same stuffing box.

Fibres 4 are trusted by rolls 8 within a cylindrical distribution elements 12, distributing the same toward the conveying bell-shaped element 13, from which the pressure fluid pressure 2 is conveyed within the cylindrical collection element 14.

Fibres 4 are collected within said cylindrical collection element 14 and flow is directed outward the chamber 1.

Three elements, i.e. cylindrical distribution element 12, bell-shaped conveying element 13 and cylindrical collection element 14, as provided according to a continuous strict positioning within chamber 1, comprise the flow accelerator assembly, realising the motion amount necessary for dragging the fibres 4.

Furthermore, three elements 12, 13, 14 also comprise a fibre distribution assembly 4, avoiding possible stresses of the fibres inside the chamber 1, due to the laying activity.

Solution described and suggested according to the present invention employs dragging rolls 8 provided inside the chamber 1, flow accelerator assembly and/or fibre distribution assembly allowing to obtain a complete and innovative laying of the bare fibre by blowing. In the apparatuses according to the invention it is possible to use any pressure motive fluid such as Nitrogen (N2) or air, without excluding the possibility of employing water.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Apparatus for laying bare fibres, **characterised in that** it comprises a watertight chamber, having an outlet communicating with the fibre laying tube, and an inlet for feeding fibres inside the same, dragging means for the fibres fed inside the watertight chamber toward said tube, means for introducing within said watertight chamber a pressure fluid flow, and fibre distribution means, means for conveying the pressure fluid and means for collecting the pressure fluid and the fibres toward said tube.

2. Apparatus for laying bare fibres according to claim 1, **characterised in that** said means for dragging the fibres within the watertight camera are comprised of two motorised rolls

3. Apparatus for laying bare fibres according to claim 2, **characterised in that** said motorisation means are positioned outside said watertight chamber.

4. Apparatus for laying bare fibres according to one of the preceding claims, **characterised in that** said fibres are fed within the watertight chamber by a sealing stuffing box.

5. Apparatus for laying bare fibres according to one of the preceding claims, **characterised in that** said fibres are taken from an idle reel, rotated by the action of said fibre dragging means.

6. Apparatus for laying bare fibres according to one of the preceding claims, **characterised in that** said fibre distribution means are comprised of a cylindrical distributed element within which fibres are addressed by said dragging means.

7. Apparatus for laying bare fibres according to one of the preceding claims, **characterised in that** said pressure fluid conveying means are comprised of bell shaped conveying means placed at the exit of said fibres distribution means.

8. Apparatus for laying bare fibres according to one of the preceding claims, **characterised in that** said means for collecting the pressure fluid and the fibres are comprised of a cylindrical collection element placed at the exit of said conveying means.

9. Apparatus for laying bare fibres according to one of the preceding claims, **characterised in that** said pressure fluid is comprised of Nitrogen, air, water, etc..

10. Apparatus for laying bare fibres according to each one of the preceding claims, substantially as illustrated and described.
